# EUROPEAN PATENT APPLICATION

(11) **EP 1 586 860 A1**
(43) Date of publication of application: **19.10.2005**
(21) Application number: 03781020.7
(22) Date of filing: 22.12.2003
(51) Int. Cl.: G01C 21/34

(54) **ROUTE DISPLAY DEVICE AND ROUTE DISPLAY METHOD**

(30) Priority: 25.12.2002 JP 2002374988
(71) Applicant: MATSUSHITA ELECTRIC INDUSTRIAL CO., LTD., Kadoma-shi, Osaka 571-8501 (JP)
(72) Inventor: SUGITA, Toru, Yokohama-shi, Kanagawa 221-0014 (JP)
(74) Representative: Pautex Schneider, Nicole Véronique
(86) International application number: PCT/JP2003/016510
(87) International publication number: WO 2004/059255

(57) **Abstract**

The present invention relates to a travel route display apparatus capable of displaying travel route segments of great importance for the operator in a clearly recognizable manner for the operator. The travel route display apparatus comprises travel distance storage means (107) for storing therein a travel distance of a moving object traveling along the searched travel route on each of the links, travel speed storage means (108) for storing therein a predetermined travel speed of the moving object traveling along the travel route, distance time conversion means (109) for converting the travel distance into travel time for each of the links, travel time storage means (110) for storing therein the travel time obtained from the distance time conversion means (109), display mode selecting means (111) for selecting one of two display modes including a time display mode and a distance display mode, and display means (113) for displaying the travel route, and in which the display means (113) is capable of displaying the travel route on the basis of the travel time of the moving object.

## Description

### TECHNICAL FIELD OF THE INVENTION

The present invention relates to a travel route display apparatus and a travel route display method, and more particularly to a travel route display apparatus for and a travel route display method of searching a travel route along which, for example, an automotive vehicle travels from a starting point to a destination point, and displaying the travel route thus searched.

### DESCRIPTION OF THE RELATED ART

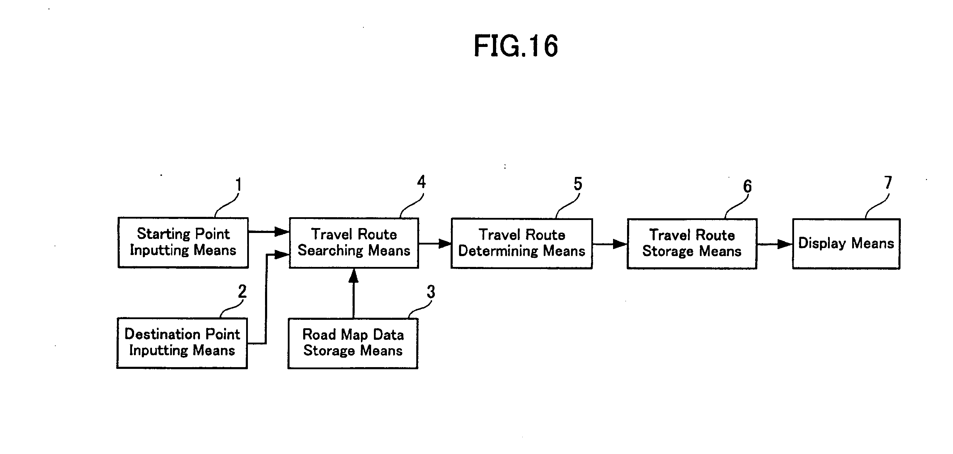

Up until now, there have been provided a wide variety of prior-art route display apparatuses. One typical example of the conventionally known travel route display apparatus is shown in FIG. 16. As clearly seen from FIG. 16, the conventional travel route display apparatus comprises starting point inputting means 1 for allowing a starting point to be inputted therein, destination point inputting means 2 for allowing a destination point to be inputted therein, road map data storage means 3 for storing therein road map data including a plurality of links forming part of a road network and distance data representative of a travel distance on each of the links, travel route searching means 4 for searching a travel route starting from the starting point to the destination point, travel route determining means 5 for determining a travel route, travel route storage means 6 for storing therein the travel route determined by the travel route determining means 5, and display means 7 for displaying the travel route.

The operation of the conventional travel route display apparatus will be described hereinlater.

The starting point inputting means 1 is operated to allow a starting point to be inputted therein, and the destination point inputting means 2 is operated to allow a destination point to be inputted therein. The travel route searching means 4 is operated to search a travel route starting from the starting point to the destination point on the basis of the road map data stored in the road map data storage means 3. Then, the travel route determining means 5 is operated to determine a travel route to be later displayed by the display means 7. The travel route storage means 6 is operated to store therein the travel route thus determined. The display means 7 is operated to display the travel route on a display screen.

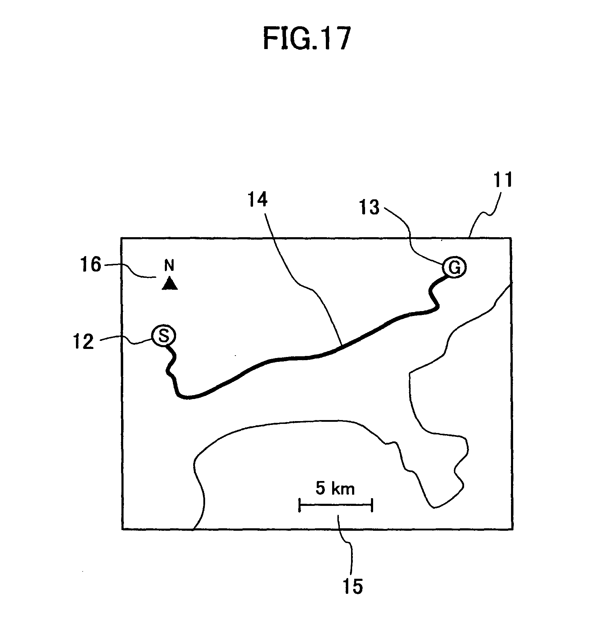

Example of the display screen, i.e., the result of the travel route searching process, displayed by the display means 7 is shown in FIG 17. As clearly seen from FIG 17, on the display screen is displayed a starting point denoted by a reference numeral 12 inputted by the starting point inputting means 1, a destination point denoted by a reference numeral 13 inputted by the destination point inputting means 2, a travel route denoted by a reference numeral 14 searched by the travel route searching means 4, a reduction scale 15 of the travel route displayed on the display screen, and a compass north 16.

As will be seen from the above description, as one of the conventionally known route display apparatus of this kind, there is proposed a route display apparatus operative to search a travel route starting from a starting point to a destination point based on road map data in response to the starting point and the destination points previously inputted therein by an operator, and display the travel route thus searched (see, for example, Patent Laid-Open Publication No. 2000-266555).

The conventional route display apparatus thus constructed as previously mentioned, however, encounters a drawback in that route segments forming part of the travel route, hereinlater referred to simply as "travel route segments", of great importance for the operator, for example, travel route segments in the vicinity of the starting point and the destination point could not be clearly recognized by the operator in the case that the operator travels a long distance starting from the starting point to the destination point partly along an express highway resulting from the fact that the express highway displayed on the display screen, which is a travel route segment forming part of the travel route of little importance for the operator, makes up the largest portion of the display screen.

The present invention is made for the purpose of overcoming the above mentioned drawback, and it is therefore an object of the present invention to provide a travel route display apparatus which can display travel route segments of great importance for the operator, for example, travel route segments in the vicinity of the starting point and the destination point, in a clearly recognizable manner for the operator, even though the operator may travel a long distance starting from the starting point to the destination point partly along an express highway.

### DISCLOSURE OF THE INVENTION

In accordance with a first aspect of the present invention, there is provided an image processing apparatus, comprising: a travel route display apparatus, comprising: starting point inputting means for inputting a starting point; destination point inputting means for inputting a destination; road map data storage means for storing therein road map data including a plurality of links forming part of a road network and distance data representative of a travel distance on each of the links; travel route searching means for searching a travel route from the starting point to the destination point; travel distance storage means for storing therein a travel distance of a moving object traveling along the travel route on each of the links; distance time conversion means for converting the travel distance into travel time on the basis of a predetermined travel speed of the moving object for each of the links; and display means for displaying the travel route, and in which the display means is operative to display the travel route on the basis of the travel time of the moving object.

In accordance with the above construction, the travel route display apparatus according to the present invention can display travel route segments, which form part of the travel route, of great importance for the operator, for example, travel route segments in the vicinity of the starting point and the destination point in a clearly recognizable manner for the operator while preserving the main feature of the travel route as a whole, even though the moving object may travel a long distance starting from the starting point to the destination point partly along an express highway resulting from the fact that the display means is operative to display the travel route on the basis of the travel time of the moving object.

In the aforementioned travel route display apparatus according to the present invention, the display means may display a time required for the moving object to travel a travel distance along the travel route displayed by the display means.

In accordance with the above construction, the travel route display apparatus according to the present invention can display the time required for the moving object to travel a travel distance along the travel route displayed by the display means in a clearly recognizable manner as being in proportion to the length of the travel route resulting from the fact that the travel route display apparatus according to the present invention can display the time required for the moving object to travel a travel distance along the travel route displayed by the display means.

The aforementioned travel route display apparatus according to the present invention may further comprise display mode selecting means for selecting one of two display modes including a time display mode to have the travel route displayed on the basis of the travel time and a distance display mode to have the travel route displayed on the basis of the travel distance, and in which the display means may assume one of two display modes including the time display mode to display the travel route on the basis of the travel time and the distance display mode to display the travel route on the basis of the travel distance in response to the display mode selected by the display mode selecting means.

In accordance with the above construction, the travel route display apparatus according to the present invention can display the travel route selectively in the time display mode and the distance display mode so that an operator can clearly recognize the travel route resulting from the fact that the display means may assume one of two display modes including the time display mode to display the travel route on the basis of the travel time and the distance display mode to display the travel route on the basis of the travel distance in response to the display mode selected by the display mode selecting means.

The aforementioned travel route display apparatus according to the present invention may further comprise: link omission judging means for judging each of the links to be displayed by the display means in a simplified manner as being partly omitted or not on the basis of a predetermined value of the travel time or a predetermined value of the travel distance, and in which the display means may have the travel route partly displayed in the simplified manner.

In accordance with the above construction, the travel route display apparatus can display the travel route in such a simplified manner that links forming part of the travel route of little importance for the operator are omitted resulting from the fact that the display means can have the travel route partly displayed in the simplified manner.

In the aforementioned travel route display apparatus according to the present invention, the display means may display the display mode selected by the display mode selecting means.

In accordance with the above construction, the travel route display apparatus according to the present invention can display the display mode, in which the display means displays the travel route, in a clearly recognizable manner for the operator resulting from the fact that the display means can display the display mode selected by the display mode selecting means.

The aforementioned travel route display apparatus according to the present invention may further comprise display screen dividing means for dividing a display screen displayed by the display means into a plurality of screen areas, and in which the display means may display the travel route on the display screen divided into the screen areas by the display screen dividing means and selectively assume one of the time display mode and the distance display mode for each of the screen areas.

In accordance with the above construction, the travel route display apparatus according to the present invention makes it possible for the operator to select the display mode for each of the screen areas resulting from the fact that the display means may display the travel route on the display screen divided into the screen areas by the display screen dividing means and selectively assume one of the time display mode and the distance display mode for each of the screen areas.

In the aforementioned travel route display apparatus according to the present invention, the display means may selectively assume one of the time display mode and the distance display mode for each of the screen areas in such a manner that each of the screen areas on which the travel route is displayed in the time display mode is distinctively different from each of the screen areas on which the travel route is displayed in the distance display mode.

In accordance with the above construction, the travel route display apparatus according to the present invention can display the display mode for each of the screen areas in a clearly recognizable manner for the operator resulting from the fact that each of the screen areas on which the travel route is displayed in the time display mode is distinctively different from each of the screen areas on which the travel route is displayed in the distance display mode.

In the aforementioned travel route display apparatus according to the present invention, the display means may selectively assume one of the time display mode and the distance display mode for each of the screen areas in such a manner that each of the screen areas on which the travel route is displayed in the time display mode is distinctively different in color from each of the screen areas on which the travel route is displayed in the distance display mode.

In accordance with the above construction, the travel route display apparatus according to the present invention can display the display mode for each of the screen areas in a clearly recognizable manner for the operator resulting from the fact that each of the screen areas on which the travel route is displayed in the time display mode is distinctively different from each of the screen areas on which the travel route is displayed in the distance display mode.

In the aforementioned travel route display apparatus according to the present invention, the display means may selectively assume one of the time display mode and the distance display mode for each of the screen areas in such a manner that each of the screen areas on which the travel route is displayed in the time display mode is distinctively different in line thickness indicative of width of each of roads forming part of the road network from each of the screen areas on which the travel route is displayed in the distance display mode.

In accordance with the above construction, the travel route display apparatus according to the present invention can display the display mode for each of the screen areas in a clearly recognizable manner for the operator resulting from the fact that each of the screen areas on which the travel route is displayed in the time display mode is distinctively different in line thickness indicative of width of each of roads forming part of the road network from each of the screen areas on which the travel route is displayed in the distance display mode.

In the aforementioned travel route display apparatus according to the present invention, the display means may selectively assume one of the time display mode and the distance display mode for each of the screen areas in such a manner that each of the screen areas on which the travel route is displayed in the time display mode is distinctively different in line style indicative of width of each of roads forming part of the road network from each of the screen areas on which the travel route is displayed in the distance display mode.

In accordance with the above construction, the travel route display apparatus according to the present invention can display the display mode for each of the screen areas in a clearly recognizable manner for the operator resulting from the fact that each of the screen areas on which the travel route is displayed in the time display mode is distinctively different in line style indicative of width of each of roads forming part of the road network from each of the screen areas on which the travel route is displayed in the distance display mode.

In the aforementioned travel route display apparatus according to the present invention, the display means may display the travel route on the basis of the travel time under the condition that the travel route searched by the travel route searching means is to be displayed as a whole extending from the starting point to the destination point.

In accordance with the above construction, the travel route display apparatus according to the present invention can display travel route segments, which form part of the travel route, of great importance for the operator in a clearly recognizable manner for the operator while preserving the main feature of the travel route as a whole, even though the moving object may travel a long distance starting from the starting point to the destination point partly along an express highway resulting from the fact that the display means may display the travel route on the basis of the travel time under the condition that the travel route searched by the travel route searching means is to be displayed as a whole extending from the starting point to the destination point.

The aforementioned travel route display apparatus according to the present invention may further comprise travel route guiding means for guiding along the travel route, and in which the display means may display the travel route on the basis of the travel time under the condition that the travel route is searched by the travel route searching means, and the display means may display the travel route on the basis of at least one of the travel time and the travel distance under the condition that the moving object is guided along the travel route by the travel route guiding means.

In accordance with the above construction, the travel route display apparatus according to the present invention can display travel route segments, which form part of the travel route, of great importance for the operator in a clearly recognizable manner for the operator while preserving the main feature of the travel route as a whole, even though the moving object may travel a long distance starting from the starting point to the destination point partly along an express highway resulting from the fact that the display means may display the travel route on the basis of the travel time under the condition that the travel route is searched by the travel route searching means, and the display means may display the travel route on the basis of at least one of the travel time and the travel distance under the condition that the moving object is guided along the travel route by the travel route guiding means.

In the aforementioned travel route display apparatus according to the present invention, the display means may display a travel route segment forming part of the travel route on the basis of the travel time under the condition that the travel route segment in the vicinity of the starting point is to be displayed within a predetermined range.

In accordance with the above construction, the travel route display apparatus according to the present invention can display a travel route segment, which forms part of the travel route, of great importance for the operator in a clearly recognizable manner for the operator resulting from the fact that the display means may display a travel route segment forming part of the travel route on the basis of the travel time under the condition that the travel route segment in the vicinity of the starting point is to be displayed within a predetermined range.

In the aforementioned travel route display apparatus according to the present invention, the display means may display a travel route segment forming part of the travel route on the basis of the travel time under the condition that the travel route segment in the vicinity of the destination point is to be displayed within a predetermined range.

In accordance with the above construction, the travel route display apparatus according to the present invention can display a travel route segment, which forms part of the travel route, of great importance for the operator in a clearly recognizable manner for the operator resulting from the fact that the display means may display a travel route segment forming part of the travel route on the basis of the travel time under the condition that the travel route segment in the vicinity of the destination point is to be displayed within a predetermined range.

In the aforementioned travel route display apparatus according to the present invention, the travel time may include waiting time and delay time, the waiting time may include time spent in waiting at a traffic light and a railroad crossing and the delay time may include time elapsed while pausing, turning right or left at an intersection.

In accordance with the above construction, the travel route display apparatus according to the present invention can display the travel route in the time display mode to have the travel route displayed on the basis of the travel time in view of the waiting time and the delay time resulting from the fact that the travel time may include waiting time and delay time.

The aforementioned travel route display apparatus according to the present invention may further comprise information receiving means for receiving traffic congestion information, and in which the travel time may include congestion travel time in view of an average travel time contained in the traffic congestion information.

In accordance with the above construction, the travel route display apparatus according to the present invention can display the travel route in the time display mode to have the travel route displayed on the basis of the travel time in view of the traffic congestion information resulting from the fact that the travel time may include congestion travel time in view of an average travel time contained in the traffic congestion information.

In accordance with a second aspect of the present invention, there is provided a travel route display method, comprising: a starting point inputting step of inputting a starting point; a destination point inputting step of inputting a destination point; a road map data reading step of reading out road map data including a plurality of links forming part of a road network and distance data representative of a travel distance on each of the links; a travel route searching step of searching a travel route from the starting point to the destination point; a travel distance storage step of storing a travel distance of a moving object traveling along the travel route on each of the links; a distance time conversion step of converting the travel distance into travel time on the basis of a predetermined travel speed of the moving object for each of the links; and a display step of displaying the travel route, and in which the display step has a step of displaying the travel route on the basis of the travel time.

In accordance with the above construction, the travel route display method according to the present invention can display travel route segments, which form part of the travel route, of great importance for the operator, for example, travel route segments in the vicinity of the starting point and the destination point in a clearly recognizable manner for the operator while preserving the main feature of the travel route as a whole, even though the moving object may travel a long distance starting from the starting point to the destination point partly along an express highway resulting from the fact that the display step has a step of displaying the travel route on the basis of the travel time of the moving object.

The aforementioned travel route display method according to the present invention may further comprise: a display screen dividing step of dividing a display screen displayed in the display step into a plurality of screen areas, and in which the display step may have a step of displaying the travel route on the display screen divided into the screen areas divided in the display screen dividing step and selectively displaying the travel route on the basis of the travel time and the travel distance for each of the screen areas divided in the display screen dividing step.

In accordance with the above construction, the travel route display method according to the present invention makes it possible for the operator to select the display mode for each of the screen areas resulting from the fact that the display step may have a step of displaying the travel route on the display screen divided into the screen areas divided in the display screen dividing step and selectively displaying the travel route on the basis of the travel time and the travel distance for each of the screen areas divided in the display screen dividing step.

The aforementioned travel route display method according to the present invention may further comprise a travel route guiding step of guiding along the travel route, and in which the display step may have a step of displaying the travel route on the basis of the travel time under the condition that the travel route is searched in the travel route searching step, and the display step may have a step of displaying the travel route on the basis of at least one of the travel time and the travel distance under the condition that the moving object is guided along the travel route in the travel route guiding step.

In accordance with the above construction, the travel route display method according to the present invention can display travel route segments, which form part of the travel route, of great importance for the operator in a clearly recognizable manner for the operator while preserving the main feature of the travel route as a whole, even though the moving object may travel a long distance starting from the starting point to the destination point partly along an express highway resulting from the fact that the display step may have a step of displaying the travel route on the basis of the travel time under the condition that the travel route is searched in the travel route searching step, and the display step may have a step of displaying the travel route on the basis of at least one of the travel time and the travel distance under the condition that the moving object is guided along the travel route in the travel route guiding step.

### BRIEF DESCRIPTION OF THE DRAWINGS

The features and advantages of a travel route display apparatus and a travel route display method according to the present invention will be more clearly understood from the following description taken in conjunction with the accompanying drawings in which:
FIG. 1 is a block diagram showing a first preferred embodiment of the travel route display apparatus according to the present invention;
FIG. 2 is a flow chart showing the processes performed by the first embodiment of the travel route display apparatus according to the present invention;
FIG. 3 is a diagram showing an example of a display screen displayed in a time display mode;
FIG. 4 is a diagram showing an example of a display screen displayed in a distance display mode;
FIG. 5 is a table showing an example of a travel route determined by a travel route determining means;
FIG. 6 is a table showing an example of a travel speed of, for example, an automotive vehicle, for each of road categories;
FIG. 7 is a table showing an example of a travel time converted from each of travel distances shown FIG. 5;
FIG. 8 is a block diagram showing a second preferred embodiment of the travel route display apparatus according to the present invention;
FIG. 9 is a flow chart showing the processes performed by the second embodiment of the travel route display apparatus according to the present invention;
FIG. 10 is a diagram showing an example of a display screen displayed in a time display mode with the travel route partly omitted;
FIG. 11 is a block diagram showing a third preferred embodiment of the travel route display apparatus according to the present invention;
FIG. 12 is a flow chart showing the processes performed by the third embodiment of the travel route display apparatus according to the present invention;
FIG. 13 is a diagram showing an example of a display screen with a plurality of divided screen areas;
FIG. 14 is a block diagram showing a fourth preferred embodiment of the travel route display apparatus according to the present invention;
FIG. 15 is a flow chart showing the processes performed by the fourth embodiment of the travel route display apparatus according to the present invention;
FIG. 16 is a block diagram showing a conventional travel route display apparatus; and
FIG. 17 is a diagram showing an example of a display screen displayed by the conventional travel route display apparatus.

### DESCRIPTION OF THE PREFERRED EMBODIMENTS

A preferred embodiment of the present invention will be described hereinafter with reference to the drawings.

### (First Preferred Embodiment)

The construction of a first preferred embodiment of a travel route display apparatus according to the present invention will be described first.

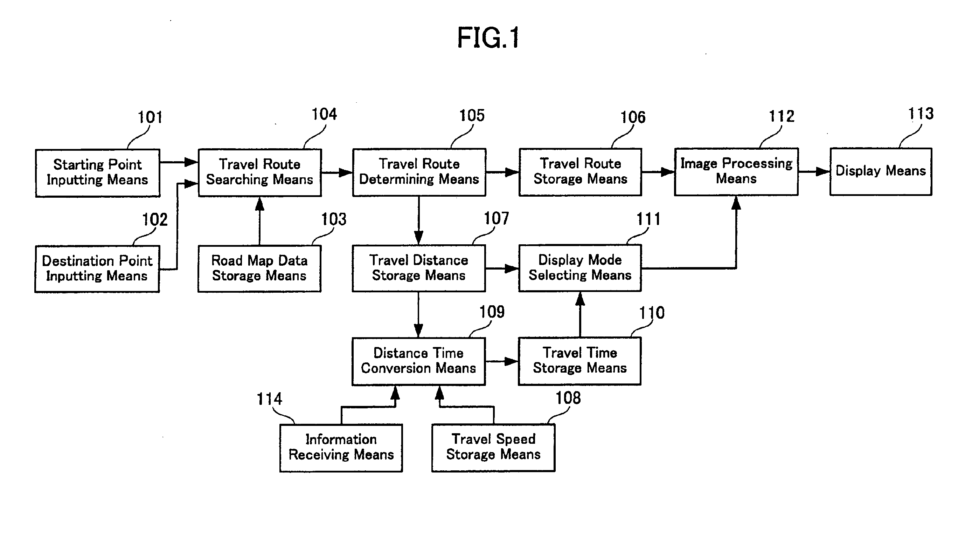

Referring to FIG. 1 of the drawings, there is shown a first embodiment of a travel route display apparatus according to the present invention, comprising starting point inputting means 101 for allowing a starting point to be inputted therein, destination point inputting means 102 for allowing a destination point to be inputted therein, road map data storage means 103 for storing therein road map data including a plurality of links forming part of a road network and distance data representative of a travel distance on each of the links, travel route searching means 104 for searching a travel route starting from the starting point to the destination point, travel route determining means 105 for determining a travel route, travel route storage means 106 for storing therein the determined travel route, travel distance storage means 107 for storing therein a travel distance of a moving object traveling along the travel route on each of the links, travel speed storage means 108 for storing therein a predetermined travel speed of the moving object traveling along the travel route, distance time conversion means 109 for converting the travel distance into travel time on the basis of the travel speed of the moving object stored in the travel speed storage means 108 for each of the links, travel time storage means 110 for storing therein the travel time obtained from the distance time conversion means 109, display mode selecting means 111 for selecting one of two display modes including a time display mode and a distance display mode, image processing means 112 for processing image data indicative of the travel route stored in the travel route storage means 106 in response to the display mode selected by the display mode selecting means 111, display means 113 for displaying the travel route, and information receiving means 114 for receiving traffic congestion information from, for example, VICS (Vehicle Information and Communication System), Internet, and the like.

The moving object may be typically constituted by, for example, an automotive vehicle, a bicycle, or the like. It is hereinlater assumed that the moving object is constituted by an automotive vehicle or the like.

The starting point inputting means 101 is constituted by, for example, a key board for allowing a starting point to be inputted therein. In addition, the starting point inputting means 101 may comprise a Global Positioning System, hereinlater simply referred to as a "GPS" operative to receive radio waves from a plurality of artificial satellites revolving around the earth to detect a current position of the automotive vehicle or the like based on the received radio waves, and the starting point inputting means 101 may allow the detected current position to be inputted therein as a starting point. The destination point inputting means 102 is constituted by, for example, an operation unit for having the display means 113 display a cursor on the display screen to make an operator specify the destination point on a road map forming part of the display screen. The road map data storage means 103 is constituted by an optical disc, a magnetic disc, a magneto-optic disc, or the like.

The travel route searching means 104 is designed to search a travel route starting from the starting point to the destination point on the basis of the road map data stored in the road map data storage means 103. The road map data includes a plurality of links forming part of a road network and distance data representative of a travel distance on each of the links. The travel route searching means 104 is operative to, for example, divide the travel distance by the travel speed of the automotive vehicle or the like stored in the travel speed storage means 108 for each of the links to calculate a minimum link cost representative of optimum links corresponding to a minimum time interval taken for the automotive vehicle or the like to travel from the starting point to the destination point, and determine a travel route constituted by the optimum links thus calculated. Here, the "links forming part of a road network" appearing hereinabove are intended to mean lines indicative of, for example, roads each connecting two adjoining nodes indicative of, for example, intersections, corners, and road ends, and the "road map data" appearing hereinabove includes distance data representative of a travel distance on each of the links forming part of the road network.

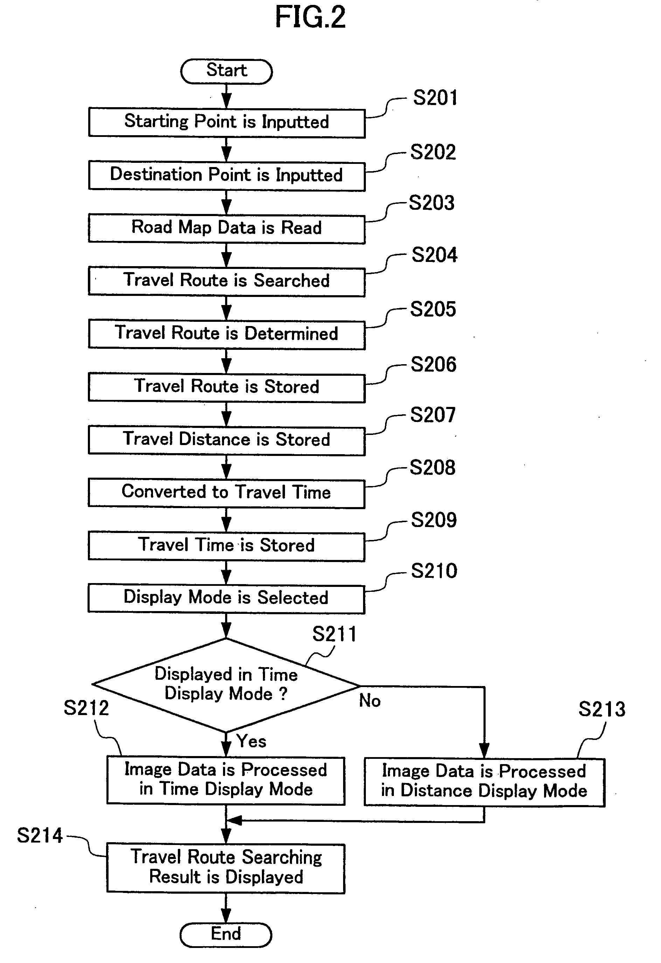

The operation of the present embodiment of the travel route display apparatus will be described hereinlater with reference to FIG 1 and FIG 2.

FIG 2 is a flow chart showing the processes performed by the present embodiment of the travel route display apparatus according to the present invention. As best shown in FIG. 2, in step S201, the starting point inputting means 101 is operated to allow a starting point to be inputted therein. Step S201 goes forward to step S202, in which the destination point inputting means 102 is operated to allow a destination point to be inputted therein. Step S202 goes forward to step S203, in which the travel route searching means 104 is operated to read out the road map data from the road map data storage means 103. The step S203 goes forward to step S204, in which the travel route searching means 104 is operated to search a travel route starting from the starting point to the destination point on the basis of the road map data read out in step S203.

Step S204 goes forward to step S205, in which the travel route determining means 105 is operated to determine at least one travel route to be displayed by the display means 113 based on a predetermined condition. Here, at least one travel route determined based on the predetermined condition is, for example, a travel route constituted by optimum links corresponding to the minimum link cost calculated as described hereinearlier, or a travel route having a minimum travel distance starting from the starting point to the destination point. Further, the display means 113 may display a plurality of travel routes and an operator may select a travel route from among a plurality of travel routes displayed by the display means 113.

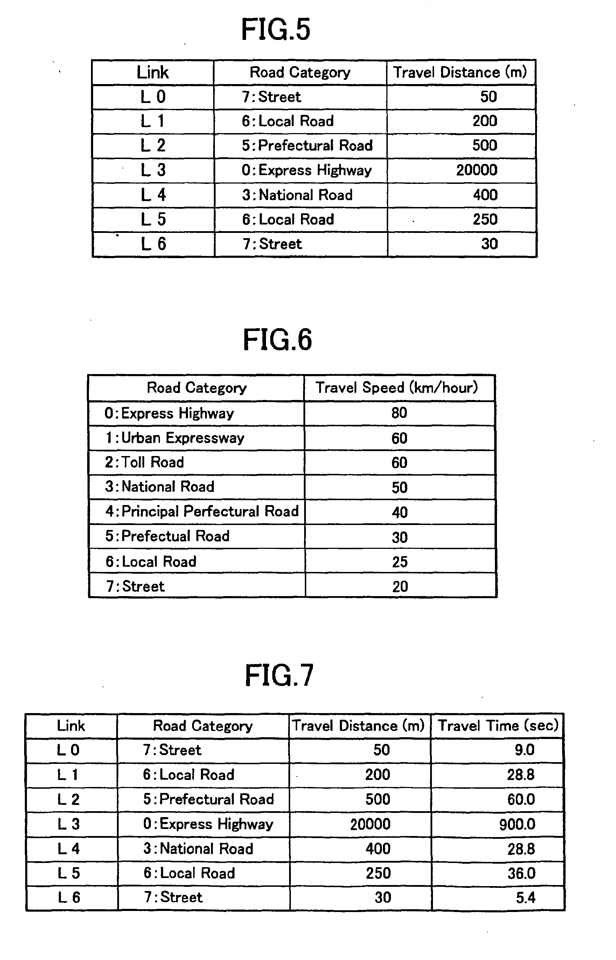

Step S205 foes forward to step S206, in which the travel route storage means 106 is operated to store therein the travel route determined by the travel route determining means 105. Step S206 goes forward to step S207, in which the travel distance storage means 107 is operated to store therein a travel distance of the automotive vehicle or the like traveling along the travel route determined by the travel route determining means 105 for each of the links. The travel distance is calculated based on the travel distance of each of the links included in the road map data stored in the road map data storage means 103. FIG. 5 is a table showing an example of the travel route determined by the travel route determining means 105. The example of the travel route shown in FIG 5 is constituted by seven links L0 to L6 starting from the starting point to the destination point. The travel distance of the automotive vehicle or the like traveling along the travel route on each of the links is indicated in FIG 5, for example, 50m for a link L0 indicative of a street, 20 kilometer for a link L3 indicative of an express highway, or the like.

Step S207 goes forward to step S208, in which the distance time conversion means 109 is operated to convert the travel distance of the automotive vehicle or the like traveling along the travel route into a travel time on the basis of the travel speed of the automotive vehicle or the like stored in the travel speed storage means 108. The operation of converting the travel distance into the travel time will be described hereinlater with reference to FIG 6 and FIG 7. FIG. 6 is a table showing an example of a travel speed of the automotive vehicle or the like for each of road categories. The travel speed of the automotive vehicle or the like traveling on, for example, a road category No. 0 representative of an express highway is set at 80 kilometer per hour while, on the other hand, the travel speed of the automotive vehicle or the like traveling on a road category No. 3 representative of a national road is set at 50 kilometer per hour as will be clearly seen from FIG. 6. Here, the "travel speed" appearing hereinabove is set as an average travel speed of the automotive or the like

FIG. 7 is a table showing an example of a travel time converted from each of the travel distances shown in FIG 6. The travel distance of the automotive vehicle or the like to travel along the travel route for, for example, the link L1 on a road category No. 6 representative of a local road is 200 meter, and the travel time taken for the automotive vehicle or the like to travel along the travel route for the link L1 is 28.8 seconds as will be clearly seen from FIG 7 because of the fact that the travel speed of the automotive vehicle or the like traveling on the road category No. 6 is 25 kilometer per hour as clearly seen from FIG 6, and thus the travel distance divided by the travel speed results in 28.8 seconds. Likewise, the travel distance of the automotive vehicle or the like can be converted into a travel time for each of the other links. It is assumed that the "travel time" appearing hereinabove includes waiting time and delay time, and the waiting time includes time spent in waiting at a traffic light and a railroad crossing and the delay time includes time elapsed while pausing, turning right or left at an intersection.

Step S208 goes forward to step S209, in which the travel time storage means 110 is operated to store therein the travel time obtained from the distance time conversion means 109. In addition, while it has been described in the above that the travel time is stored in the travel time storage means 110, the travel time may be calculated in view of an average travel time contained in the traffic congestion information received by the information receiving means 114 in place of the travel time stored in the travel time storage means 110. Further, as the travel time may be used the average travel time contained in the traffic congestion information received by the information receiving means 114. Step S209 goes forward to step S210, in which the display mode selecting means 111 is operated to select one of two display modes including a time display mode to have the display means 113 display the travel route on the basis of the travel time taken for the automotive vehicle or the like to travel along the travel route on each of the links and a distance display mode to have the display means 113 display the travel route on the basis of the travel distance of the automotive vehicle or the like traveling along the travel route for each of the links. Step S210 goes forward to step S211, in which it is judged whether or not the time display mode is selected.

When it is judged that the time display mode is selected, step S211 goes forward to step S212, in which the image processing means 112 is operated to process image data indicative of the travel route stored in the travel route storage means 106 in the time display mode, and step S212 goes forward to step S214. When, on the other hand, it is judged that the distance display mode is selected, step S211 goes forward to step S213, in which the image processing means 112 is operated to process image data indicative of the travel route stored in the travel route storage means 106 in the distance display mode, and step S213 goes forward to step S214. In step S214, the display means 113 is operated to display the result of travel route searching process, i.e., the travel route thus processed in one of the time display mode and the distance display mode.

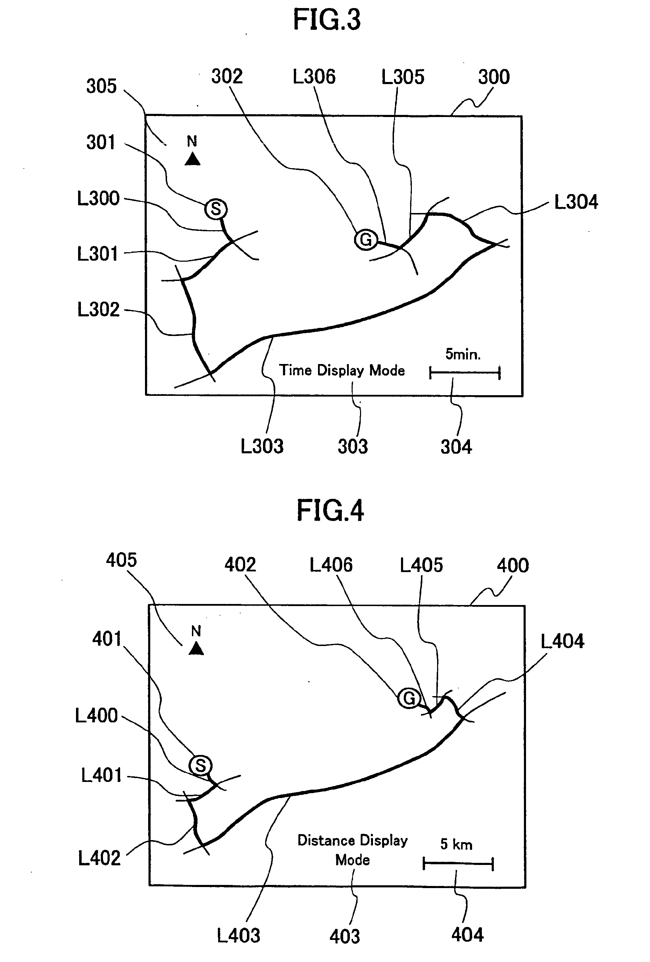

The examples of the result of the travel route searching process, i.e., the display screen displayed by the display means 113 are shown in FIG 3 and FIG 4. FIG. 3 is a diagram showing an example of the display screen 300 displayed by the display means 113 in the time display mode. On the display screen 300 is displayed a starting point 301, a destination point 302, a travel route constituted by a plurality of links L 300 to L306 starting from the starting point 301 to the destination point 302 indicated in the time display mode, a mode sign 303 indicative of the display mode selected by the display mode selecting means 111, a reduction scale 304 indicative of a travel time required for the automotive vehicle or the like to travel along the searched travel route for a predetermined travel distance, and a compass north 305 indicative of the orientation of the display screen 300. The links L300 to L306 displayed on the display screen 300 respectively correspond to the link L0 to L6 shown in FIG 7, and the link L303 is indicative of an express highway.

FIG. 4, on the other hand, is a diagram showing an example of the display screen 400 displayed by the display means 113 in the distance display mode. On the display screen 400 is displayed a starting point 401, a destination point 402, a travel route constituted by a plurality of links L 400 to L406 starting from the starting point 401 to the destination point 402 indicated in the distance display mode, a mode sign 403 indicative of the display mode selected by the display mode selecting means 111, a reduction scale 404 indicative of a predetermined travel distance of the automotive vehicle or the like traveling along the travel route, and a compass north 405 indicative of the orientation of the display screen 400. The links L400 to L406 displayed on the display screen 400 respectively correspond to the link L0 to L6 shown in FIG 7, and the link L403 is indicative of an express highway.

The comparison drawn between the display screen 300 shown in FIG. 3 and the display screen 400 shown in FIG. 4 results in the fact that the travel route displayed in the time display mode shown in FIG. 3 can be more clearly recognized by the operator than the travel route displayed in the distance display mode shown in FIG. 4 for the reason that route segments forming part of the travel route, hereinlater referred to simply as "travel rout segments", of great importance for the operator, for example, travel route segments in the vicinity of the starting point and the destination point, are displayed in a clearly recognizable manner, while preserving the main feature of the travel route as a whole.

The aforementioned steps S201, S202, S203, S204, S207, S208, and S214 respectively constitute a starting point inputting step, a destination point inputting step, a road map data reading step, a travel route searching step, a travel distance storage step, a distance time conversion step, and a display step.

As will be seen from the foregoing description, it is to be understood that the present embodiment of the route display apparatus according to the present invention can display the travel route segments of great importance for the operator, for example, travel route segments in the vicinity of the starting point and the destination point in a clearly recognizable manner while preserving the main feature of the travel route as a whole, even though the automotive vehicle or the like may travel a long distance starting from the starting point to the destination point partly along an express highway resulting from the fact that the distance time conversion means 109 is operative to convert the travel distance of the automotive vehicle or the like traveling along the travel route into a travel time taken for the automotive vehicle or the like to travel along the travel route, and the display means 113 is operative to display the travel route on the basis of the travel time.

Further, it is needless to mention that the present embodiment of the route display apparatus according to the present invention can still obtain the same effect as described in the above in the case that the travel route starting from the starting point to the destination point is partly constituted by a plurality of express highways and travel route segments between the adjoining express highways are of great importance for the operator for the reason that the travel route segments in the vicinity of the entrance and the exit of the express highway are displayed in a clearly recognizable manner, while preserving the main feature of the travel route as a whole.

### (Second Preferred Embodiment)

The construction of a second preferred embodiment of a travel route display apparatus according to the present invention will be described first.

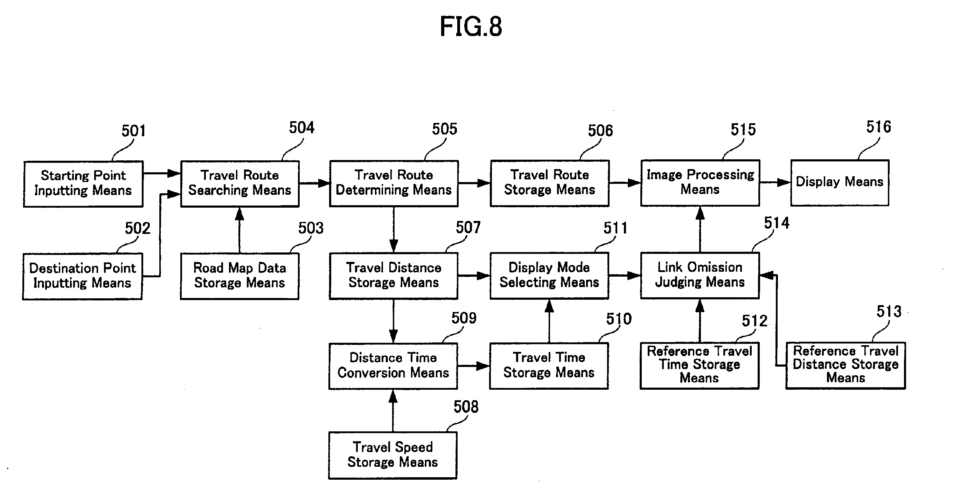

As best shown in FIG. 8, the present embodiment of the travel route display apparatus according to the present invention comprises starting point inputting means 501 for allowing a starting point to be inputted therein, destination point inputting means 502 for allowing a destination point to be inputted therein, road map data storage means 503 for storing therein road map data including a plurality of links forming part of a road network and distance data representative of a travel distance on each of the links, travel route searching means 504 for searching a travel route starting from the starting point to the destination point, travel route determining means 505 for determining a travel route, travel route storage means 506 for storing therein the determined travel route, travel distance storage means 507 for storing therein a travel distance of a moving object traveling along the travel route on each of the links, travel speed storage means 508 for storing therein a predetermined travel speed of the moving object traveling along the travel route, distance time conversion means 509 for converting the travel distance into travel time on the basis of the travel speed of the moving object stored in the travel speed storage means 508 for each of the links, travel time storage means 510 for storing therein the travel time obtained from the distance time conversion means 509, display mode selecting means 511 for selecting one of two display modes including a time display mode and a distance display mode, reference travel time storage means 512 for storing therein a reference travel time, reference travel distance storage means 513 for storing therein a reference travel distance, link omission judging means 514 for judging each of the links to be displayed in a simplified manner as being partly omitted or not on the basis of the display mode selected by the display mode selecting means 511, and the reference travel time or the reference travel distance, image processing means 515 for processing image data indicative of the travel route stored in the travel route storage means 506 in response to the result made by the link omission judging means 514, and display means 516 for displaying the travel route. The moving object may be typically constituted by, for example, an automotive vehicle, a bicycle, or the like. It is hereinlater assumed that the moving object is constituted by an automotive vehicle or the like.

The starting point inputting means 501 is constituted by, for example, a key board for allowing a starting point to be inputted therein. In addition, the starting point inputting means 501 may comprise a Global Positioning System, hereinlater simply referred to as a "GPS" operative to receive radio waves from a plurality of artificial satellites revolving around the earth to detect a current position of the automotive vehicle or the like based on the received radio waves, and the starting point inputting means 501 may allow the detected current position to be inputted therein as a starting point. The destination point inputting means 502 is constituted by, for example, an operation unit for having the display means 516 display a cursor on the display screen to make an operator specify the destination point on a road map forming part of the display screen. The road map data storage means 503 is constituted by an optical disc, a magnetic disc, a magneto-optic disc, or the like.

The travel route searching means 504 is designed to search a travel route starting from the starting point to the destination point on the basis of the road map data stored in the road map data storage means 503. The road map data includes a plurality of links forming part of a road network and distance data representative of a travel distance on each of the links. The travel route searching means 504 is operative to, for example, divide the travel distance by the travel speed of the automotive vehicle or the like stored in the travel speed storage means 508 on each of the links to calculate a minimum link cost representative of optimum links corresponding to a minimum time interval taken for the automotive vehicle or the like to travel from the starting point to the destination point, and determine a travel route constituted by the optimum links thus calculated. Here, the "links forming part of a road network" appearing hereinabove are intended to mean lines indicative of, for example, roads each connecting two adjoining nodes indicative of, for example, intersections, corners, and road ends, and the "road map data" appearing hereinabove includes distance data representative of a travel distance on each of the links forming part of the road network.

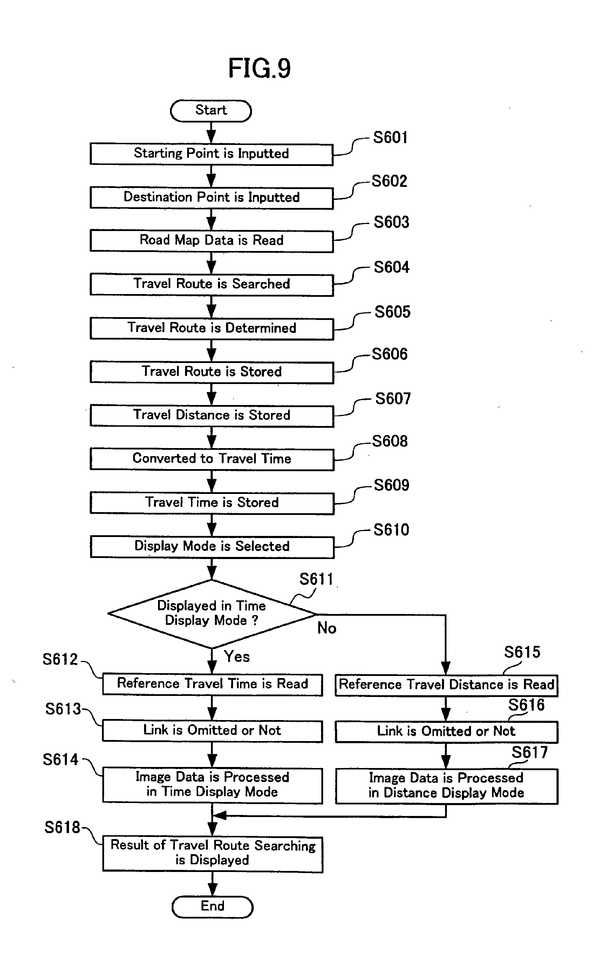

The operation of the present embodiment of the travel route display apparatus will be described hereinlater with reference to FIG 8 and FIG 9.

FIG 9 is a flow chart showing the processes performed by the present embodiment of the travel route display apparatus according to the present invention. As best shown in FIG. 9, in step S601, the starting point inputting means 501 is operated to allow a starting point to be inputted therein. Step S601 goes forward to step S602, in which the destination point inputting means 502 is operated to allow a destination point to be inputted therein. Step S602 goes forward to step S603, in which the travel route searching means 504 is operated to read out the road map data from the road map data storage means 503. The step S603 goes forward to step S604, in which the travel route searching means 504 is operated to search a travel route starting from the starting point to the destination point on the basis of the road map data read out in step S603.

Step S604 goes forward to step S605, in which the travel route determining means 505 is operated to determine at least one travel route to be displayed by the display means 516 based on a predetermined condition. Here, at least one travel route determined based on the predetermined condition is, for example, a travel route constituted by optimum links corresponding to the minimum link cost calculated as described hereinearlier, or a travel route having a minimum travel distance starting from the starting point to the destination point. Further, the display means 516 may display a plurality of travel routes and an operator may select a travel route from among a plurality of travel routes displayed by the display means 516.

Step S605 foes forward to step S606, in which the travel route storage means 506 is operated to store therein the travel route determined by the travel route determining means 505. Step S606 goes forward to step S607, in which the travel distance storage means 507 is operated to store therein a travel distance of the automotive vehicle or the like traveling along the travel route determined by the travel route determining means 505 on each of the links. The travel distance is calculated based on the travel distance of each of the links included in the road map data stored in the road map data storage means 503. An example of the travel route determined by the travel route determining means 505 is the same as that of the travel route shown in FIG 5. The example of the travel route shown in FIG 5 has been described in the above, and thus will not be described in detail hereinlater.

Step S607 goes forward to step S608, in which the distance time conversion means 509 is operated to convert the travel distance of the automotive vehicle or the like traveling along the travel route into a travel time on the basis of the travel speed of the automotive vehicle or the like stored in the travel speed storage means 508. The operation of converting the travel distance into the travel time has been described in the above with reference to FIG 6 and FIG 7, and thus will not be described hereinlater.

Step S608 goes forward to step S609, in which the travel time storage means 510 is operated to store therein the travel time obtained from the distance time conversion means 509. Step S609 goes forward to step S610, in which the display mode selecting means 511 is operated to select one of display modes. Step S610 goes forward to step S611, in which it is judged whether or not the time display mode is selected. Here, the display modes include a time display mode to have the display means 516 display the travel route on the basis of the travel time taken for the automotive vehicle or the like to travel along the travel route on each of the links and a distance display mode to have the display means 516 display the travel route on the basis of the travel distance of the automotive vehicle or the like traveling along the travel route on each of the links.

When it is judged that the time display mode is selected, step S611 goes forward to step S612, in which the link omission judging means 514 is operated to read out the reference travel time stored in the reference travel time storage means 512. Here, the reference travel time is intended to mean a time period such as, for example, 30 seconds, 150 seconds, or the like. The operator may arbitrarily specify and store the reference travel time in the reference travel time storage means 512. Step S612 goes forward to step S613, in which the link omission judging means 514 is operated to judge each of the links constituting the searched travel route to be displayed by the display means 516 in a simplified manner as being partly omitted or not based on the reference travel time. For the purpose of assisting in understanding, it is herein assumed that the reference travel time is specified at, for example, 500 seconds, and the link omission judging means 514 is operated to judge each of the links, for example, shown in FIG 7. The link omission judging means 514 is operated to judge the link L3 to be displayed by the display means 516 in a simplified manner as being partly omitted and the links L0 to L2 and L4 to L6 to be displayed by the display means 516 not in the simplified manner because of the fact that only the travel time for the link L3 indicative of an express highway is greater than 500 seconds while each of the travel times for the other links L0 to L2, and L4 to L6 is not greater than 500 seconds. Step S613 goes forward to step S614, in which the image processing means 515 is operated to process image data indicative of the travel route thus calculated in the time display mode. Step S614 goes forward to step S618.

When, on the other hand, it is judged that the time display mode is not selected, step S611 goes forward to step S615, in which the link omission judging means 514 is operated to read out the reference travel distance stored in the reference travel distance storage means 513. Here, the reference travel distance is intended to mean a distance such as, for example, 300 meter, 15 kilometer, or the like. The operator may arbitrarily specify and store the reference travel distance in the reference travel distance storage means 513. Step S615 goes forward to step S616, in which the link omission judging means 514 is operated to judge each of the links constituting the searched travel route to be displayed by the display means 516 in a simplified manner as being partly omitted or not based on the reference travel distance. For the purpose of assisting in understanding, it is herein assumed that the reference travel distance is specified at, for example, 15 kilometer, and the link omission judging means 514 is operated to judge each of the links, for example, shown in FIG 7. The link omission judging means 514 is operated to judge the link L3 to be displayed by the display means 516 in a simplified manner as being partly omitted and the links L0 to L2 and L4 to L6 to be displayed by the display means 516 not in the simplified manner because of the fact that only the travel distance for the link L3 indicative of an express highway is greater than 15 kilometer while each of the travel distances for the other links L0 to L2, and L4 to L6 is not greater than 15 kilometer. Step S616 goes forward to step S617, in which the image processing means 515 is operated to process image data indicative of the travel route thus calculated in the distance display mode. Step S617 goes forward to step S618.

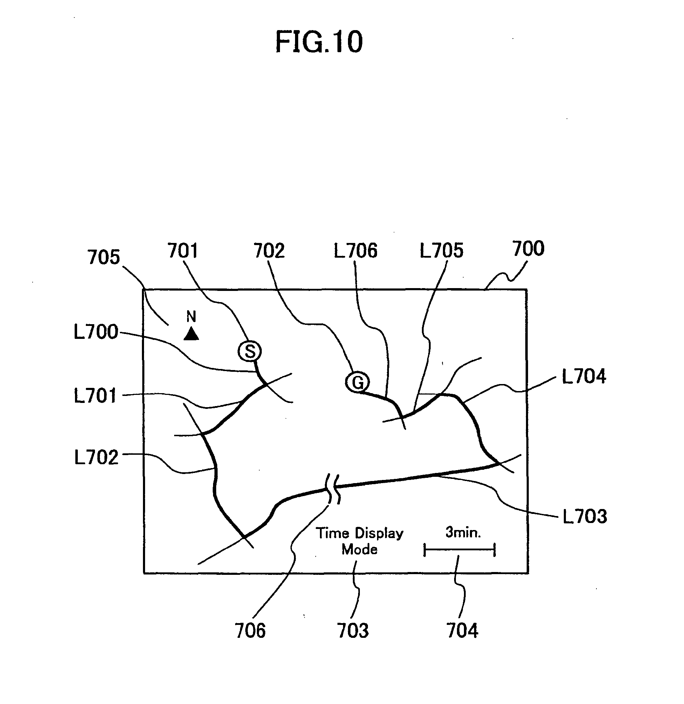

In step S618, the display means 516 is operated to display the travel route thus searched and processed. The example of the result of the travel route searching process, i.e., the display screen displayed by the display means 516 is shown in FIG 10. FIG. 10 is a diagram showing an example of the display screen 700 displayed by the display means 516 in the time display mode. On the display screen 700 is displayed a starting point 701, a destination point 702, a travel route constituted by a plurality of links L 700 to L706 starting from the starting point 701 to the destination point 702 indicated in the time display mode, a mode sign 703 indicative of the display mode selected by the display mode selecting means 511, a reduction scale 704 indicative of a travel time required for the automotive vehicle or the like to travel along the searched travel route for a predetermined travel distance, a compass north 705 indicative of the orientation of the display screen 700, and an omission symbol 706.

The links L700 to L706 displayed on the display screen 700 respectively correspond to the link L0 to L6 shown in FIG 7, and the link L703 is indicative of an express highway. As described in the above, the link L703 is displayed by the display means 516 in a simplified manner as being partly omitted with the omission symbol 706. The travel route thus displayed by the display means 516 can be easily recognized by the operator for the reason that the area of the display screen 700 is enlarged, and thus travel route segments of great importance for the operator are displayed in a clearly recognizable manner, resulting from the fact that the link 703 indicative of an express highway is in part omitted as will be clearly seen from FIG 10. In addition, the fact that the reduction scale 304 of the display screen 300 shown in FIG 3 is five minutes while, on the other hand, the reduction scale 704 of the display screen 700 shown in FIG 10 is three minutes leads to the fact that the display screen 700 shown in FIG 10, in which the travel route is in part omitted, can be more clearly recognized by the operator than the display screen 300 shown in FIG 3 for the reason that travel route segments of great importance for the operator, for example, travel route segments in the vicinity of the starting point and the destination point, are displayed in a clearly recognizable manner. Further, the display screen 700 shown in FIG 10 in which the travel route is in part omitted can be more clearly recognized by the operator than the display screen 300 shown in FIG. 3 for the reason that the display screen 700 shown in FIG. 10 is less complex than the display screen 300.

While it has been described in the above that the travel route can be displayed in a simplified manner that the links forming part of the travel route are displayed as being in part omitted with the omission symbol 706, the link forming part of the travel route may be displayed as being in part, for example, with dashed lines, shortened, or the like. Further, the example of the display screen displayed in the distance display mode will not be described hereinlater.

The aforementioned steps S601, S602, and S603 respectively constitute a starting point inputting step, a destination point inputting step, and a road map data reading step. The aforementioned steps S604, S607, and S608 respectively constitute a travel route searching step, a travel distance storage step, and a distance time conversion step. The aforementioned step S618 constitutes a display step.

As will be seen from the foregoing description, it is to be understood that the present embodiment of the route display apparatus according to the present invention can display travel route segments of great importance for the operator, for example, travel route segments in the vicinity of the starting point and the destination point in a clearly recognizable manner as being enlarged and the travel route segments of less importance for the operator in a simplified manner as being in part omitted while preserving the main feature of the travel route as a whole, resulting from the fact that the link omission judging means 514 is operative to judge each of the links constituting the searched travel route to be displayed by the display means 516 in a simplified manner as being partly omitted or not based on, for example, the reference travel time.

### (Third Preferred Embodiment)

The construction of a third preferred embodiment of a travel route display apparatus according to the present invention will be described first.

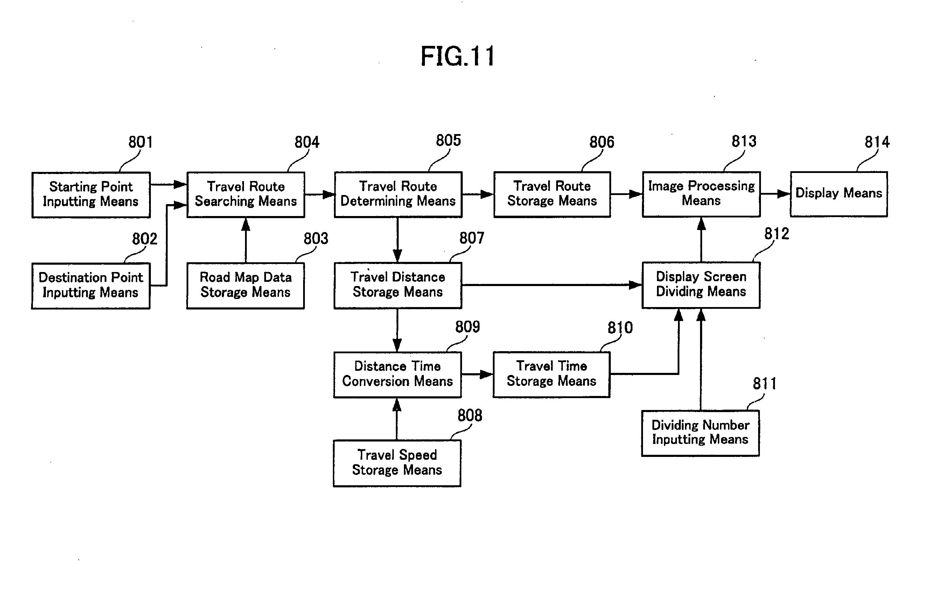

As best shown in FIG 11, the present embodiment of the travel route display apparatus according to the present invention comprises starting point inputting means 801 for allowing a starting point to be inputted therein, destination point inputting means 802 for allowing a destination point to be inputted therein, road map data storage means 803 for storing therein road map data including a plurality of links forming part of a road network and distance data representative of a travel distance on each of the links, travel route searching means 804 for searching a travel route starting from the starting point to the destination point, travel route determining means 805 for determining a travel route, travel route storage means 806 for storing therein the determined travel route, travel distance storage means 807 for storing therein a travel distance of a moving object traveling along the travel route on each of the links, travel speed storage means 808 for storing therein a predetermined travel speed of the moving object traveling along the travel route, distance time conversion means 809 for converting the travel distance into travel time on the basis of the travel speed of the moving object stored in the travel speed storage means 808 for each of the links, travel time storage means 810 for storing therein the travel time obtained from the distance time conversion means 809, display screen dividing means 812 for dividing a display screen into a number of screen areas in respective display modes, dividing number inputting means 811 for having inputted therein the number of screen areas to be divided into by the display screen dividing means 812, image processing means 813 for processing image data indicative of the travel route stored in the travel route storage means 806 in response to the display mode selected by the display screen dividing means 812, and display means 814 for displaying the travel route. The moving object may be typically constituted by, for example, an automotive vehicle, a bicycle, or the like. It is hereinlater assumed that the moving object is constituted by an automotive vehicle or the like.

The starting point inputting means 801 is constituted by, for example, a key board for allowing a starting point to be inputted therein. In addition, the starting point inputting means 801 may comprise a Global Positioning System, hereinlater simply referred to as a "GPS" operative to receive radio waves from a plurality of artificial satellites revolving around the earth to detect a current position of the automotive vehicle or the like based on the received radio waves, and the starting point inputting means 801 may allow the detected current position to be inputted therein as a starting point. The destination point inputting means 802 is constituted by, for example, an operation unit for having the display means 814 display a cursor on the display screen to make an operator specify the destination point on a road map forming part of the display screen. The road map data storage means 803 is constituted by an optical disc, a magnetic disc, a magneto-optic disc, or the like.

The travel route searching means 804 is designed to search a travel route starting from the starting point to the destination point on the basis of the road map data stored in the road map data storage means 803. The road map data includes a plurality of links forming part of a road network and distance data representative of a travel distance on each of the links. The travel route searching means 804 is operative to, for example, divide the travel distance by the travel speed of the automotive vehicle or the like stored in the travel speed storage means 808 on each of the links to calculate a minimum link cost representative of optimum links corresponding to a minimum time interval taken for the automotive vehicle or the like to travel from the starting point to the destination point, and determine a travel route constituted by the optimum links thus calculated. Here, the "links forming part of a road network" appearing hereinabove are intended to mean lines indicative of, for example, roads each connecting two adjoining nodes indicative of, for example, intersections, corners, and road ends, and the "road map data" appearing hereinabove includes distance data representative of a travel distance on each of the links forming part of the road network.

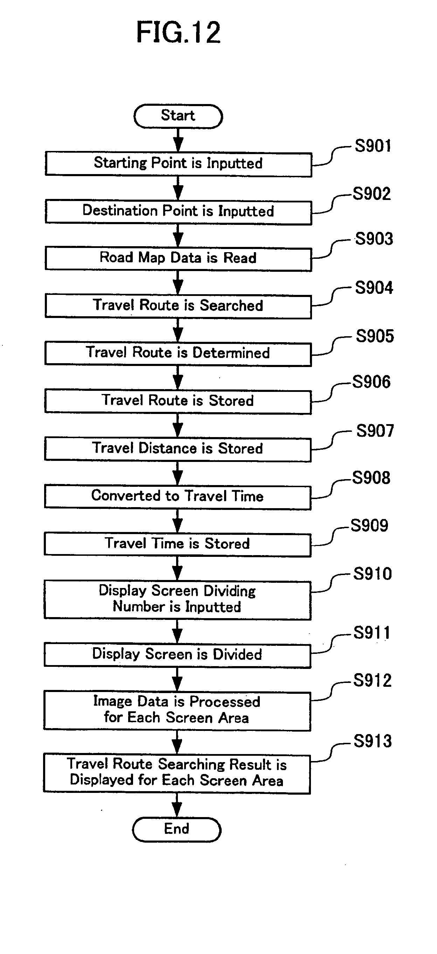

The operation of the present embodiment of the travel route display apparatus will be described hereinlater with reference to FIG 11 and FIG 12.

FIG 12 is a flow chart showing the processes performed by the present embodiment of the travel route display apparatus according to the present invention. As best shown in FIG. 12, in step S901, the starting point inputting means 801 is operated to allow a starting point to be inputted therein. Step S901 goes forward to step S902, in which the destination point inputting means 802 is operated to allow a destination point to be inputted therein. Step S902 goes forward to step S903, in which the travel route searching means 804 is operated to read out the road map data from the road map data storage means 803. The step S903 goes forward to step S904, in which the travel route searching means 804 is operated to search a travel route starting from the starting point to the destination point on the basis of the road map data read out in step S903.

Step S904 goes forward to step S905, in which the travel route determining means 805 is operated to determine at least one travel route to be displayed by the display means 814 based on a predetermined condition. Here, at least one travel route determined based on the predetermined condition is, for example, a travel route constituted by optimum links corresponding to the minimum link cost calculated as described hereinearlier, or a travel route having a minimum travel distance starting from the starting point to the destination point. Further, the display means 814 may display a plurality of travel routes and an operator may select a travel route from among a plurality of travel routes displayed by the display means 814.

Step S905 foes forward to step S906, in which the travel route storage means 806 is operated to store therein the travel route determined by the travel route determining means 805. Step S906 goes forward to step S907, in which the travel distance storage means 807 is operated to store therein a travel distance of the automotive vehicle or the like traveling along the travel route determined by the travel route determining means 805 on each of the links. The travel distance is calculated based on the travel distance of each of the links included in the road map data stored in the road map data storage means 803. An example of the travel route determined by the travel route determining means 805 is the same as that of the travel route shown in FIG 5. The example of the travel route shown in FIG 5 has been described in the above, and thus will not be described in detail hereinlater.

Step S907 goes forward to step S908, in which the distance time conversion means 809 is operated to convert the travel distance of the automotive vehicle or the like traveling along the travel route into a travel time on the basis of the travel speed of the automotive vehicle or the like stored in the travel speed storage means 808. The operation of converting the travel distance into the travel time has been described in the above with reference to FIG 6 and FIG 7, and thus will not be described hereinlater.

Step S908 goes forward to step S909, in which the travel time storage means 810 is operated to store therein the travel time obtained from the distance time conversion means 809. Step S909 goes forward to step S910, in which the dividing number inputting means 811 is operated to have inputted therein the number of screen areas, i.e., a display screen dividing number. For the purpose of assisting in understanding, it is herein assumed that the operator inputs, for example, three in the dividing number inputting means 811 to divide a display screen to be displayed by the display means 814 into three screen areas. The travel route is displayed on the display screen. Step S910 goes forward to step S911, in which the display screen dividing means 812 is operated to divide a display screen to be displayed by the display means 814 into the number of screen areas in respective display modes. The display screen dividing means 812 may be operated to divide a display screen into the number of screen areas respectively at locations arbitrarily specified by the operators in step S910. It is needless to mention that the display screen dividing means 812 may be operated to divide a display screen into the number of screen areas respectively at predetermined locations.

Step S911 goes forward to step S912, in which the image processing means 813 is operated to process image data indicative of the travel route thus searched for each of the screen areas divided in step S911. Step S912 goes forward to step S913, in which the display means 814 is operated to display the travel route thus searched and processed for each of the screen areas.

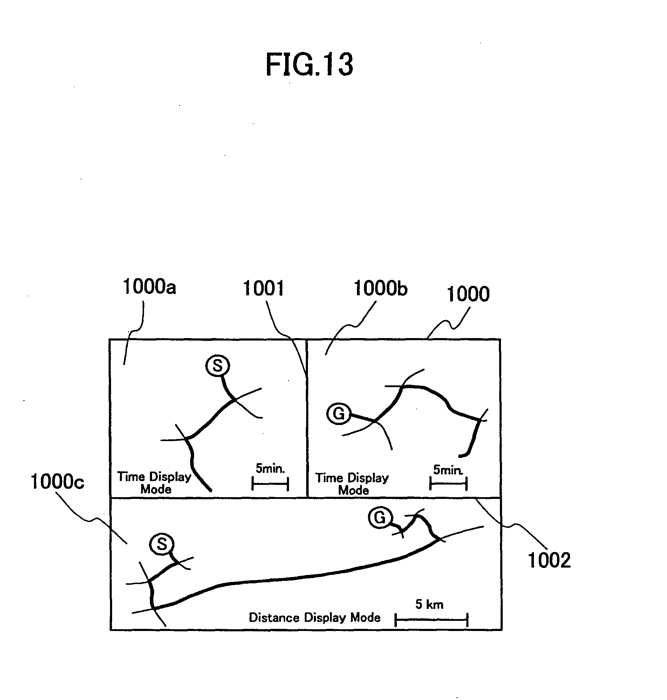

The example of the result of the travel route searching process, i.e., the display screen displayed by the display means 814 is shown in FIG 13. FIG. 13 is a diagram showing an example of the display screen 1000 displayed by the display means 814 with three divided screen areas. On the display screen 100 is displayed a first screen area 1000a, a second screen area 1000b, a third screen area 1000c, a parting line 1001 parting the first screen area 1000a from the second screen area 1000b, and a parting line 1002 parting the first and second screen areas 1000a and 1000b from the third screen area 1000c. On the first screen area 1000a is displayed a travel road segment forming part of the travel road in the vicinity of the starting point in the time display mode and on the second screen area 1000b is displayed a travel road segment forming part of the travel road in the vicinity of the destination point in the time display mode. On the third screen area 1000c is displayed the travel road as a whole in the distance mode.

Though it has been described in the above that the screen areas displayed by the display means 814 are distinctively different from one another with the parting lines 1001 and 1002, the screen areas displayed by the display means 814 may be distinctively different from one another in color. Further, it is need less to mention that the screen areas displayed by the display means 814 may be distinctively different from one another in any other way such as, for example, line thickness indicative of width of each of roads forming part of the road network, or line style indicative of width of each of roads forming part of the road network.

The aforementioned steps S901, S902, and S903 respectively constitute a starting point inputting step, a destination point inputting step, and a road map data reading step. The aforementioned steps S904, S907, and S908 respectively constitute a travel route searching step, a travel distance storage step, and a distance time conversion step. The aforementioned steps S911 and S913 respectively constitute a display screen dividing step and a display step.

As will be seen from the foregoing description, it is to be understood that the present embodiment of the route display apparatus according to the present invention can display travel route segments of great importance for the operator, for example, travel route segments in the vicinity of the starting point and the destination point in a clearly recognizable manner while preserving the main feature of the travel route as a whole, resulting from the fact that the display screen dividing means 812 is operative to divide a display screen to be displayed by the display means 814 into a number of screen areas in respective display modes, and the display means 814 is operative to display the travel route on the display screen divided into the screen areas by the display screen dividing means 812 and selectively assume one of the time display mode and the distance display mode for each of the screen areas.

### (Fourth Preferred Embodiment)

The construction of a fourth preferred embodiment of a travel route display apparatus according to the present invention will be described first.

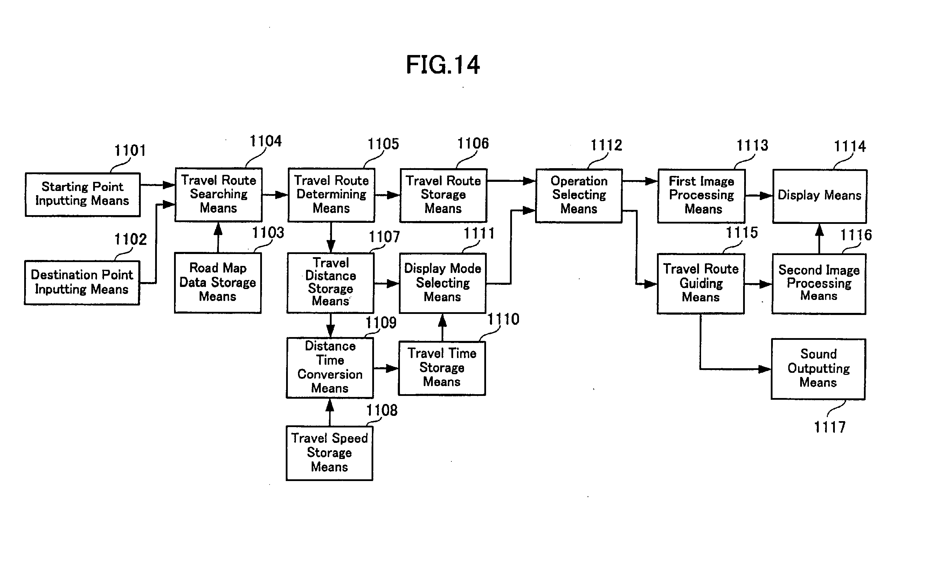

As best shown in FIG 14, the present embodiment of the travel route display apparatus according to the present invention comprises starting point inputting means 1101 for allowing a starting point to be inputted therein, destination point inputting means 1102 for allowing a destination point to be inputted therein, road map data storage means 1103 for storing therein road map data including a plurality of links forming part of a road network and distance data representative of a travel distance on each of the links, travel route searching means 1104 for searching a travel route starting from the starting point to the destination point, travel route determining means 1105 for determining a travel route, travel route storage means 1106 for storing therein the determined travel route, travel distance storage means 1107 for storing therein a travel distance of a moving object traveling along the travel route on each of the links, travel speed storage means 1108 for storing therein a predetermined travel speed of the moving object traveling along the travel route, distance time conversion means 1109 for converting the travel distance into travel time on the basis of the travel speed of the moving object stored in the travel speed storage means 1108 for each of the links, travel time storage means 1110 for storing therein the travel time obtained from the distance time conversion means 1109, display mode selecting means 1111 for selecting one of two display modes including a time display mode to have the travel route displayed on the basis of the travel time and a distance display mode to have the travel route displayed on the basis of the travel distance, operation selecting means 1112 for selecting one of two operation modes including a searching operation mode to have the result of the travel route searching process displayed and a guiding operation mode to have the operator guided along the travel route, first image processing means 1113 for processing image data indicative of the travel route stored in the travel route storage means 1106 in response to the display mode selected by the display mode selecting means 1111, display means 1114 for displaying the travel route, travel route guiding means 1115 for guiding the moving object along the travel route, second image processing means 1116 for processing image data indicative of the travel route along which the moving object is to be guided, and sound outputting means 1117 for outputting voice sounds guiding the operator along the travel route. The moving object may be typically constituted by, for example, an automotive vehicle, a bicycle, or the like. It is hereinlater assumed that the moving object is constituted by an automotive vehicle or the like.

The starting point inputting means 1101 is constituted by, for example, a key board for allowing a starting point to be inputted therein. In addition, the starting point inputting means 1101 may comprise a Global Positioning System, hereinlater simply referred to as a "GPS" operative to receive radio waves from a plurality of artificial satellites revolving around the earth to detect a current position of the automotive vehicle or the like based on the received radio waves, and the starting point inputting means 1101 may allow the detected current position to be inputted therein as a starting point. The destination point inputting means 1102 is constituted by, for example, an operation unit for having the display means 1114 display a cursor on the display screen to make an operator specify the destination point on a road map forming part of the display screen. The road map data storage means 1103 is constituted by an optical disc, a magnetic disc, a magneto-optic disc, or the like.

The travel route searching means 1104 is designed to search a travel route starting from the starting point to the destination point on the basis of the road map data stored in the road map data storage means 1103. The road map data includes a plurality of links forming part of a road network and distance data representative of a travel distance on each of the links. The travel route searching means 1104 is operative to, for example, divide the travel distance by the travel speed of the automotive vehicle or the like stored in the travel speed storage means 1108 on each of the links to calculate a minimum link cost representative of optimum links corresponding to a minimum time interval taken for the automotive vehicle or the like to travel from the starting point to the destination point, and determine a travel route constituted by the optimum links thus calculated. Here, the "links forming part of a road network" appearing hereinabove are intended to mean lines indicative of, for example, roads each connecting two adjoining nodes indicative of, for example, intersections, corners, and road ends, and the "road map data" appearing hereinabove includes distance data representative of a travel distance on each of the links forming part of the road network.

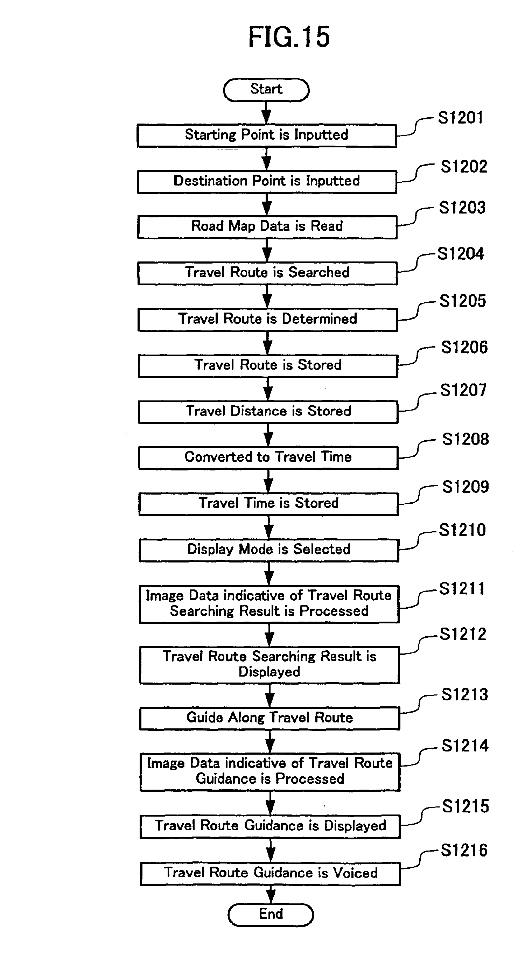

The operation of the present embodiment of the travel route display apparatus will be described hereinlater with reference to FIG 14 and FIG 15.

FIG 15 is a flow chart showing the processes performed by the present embodiment of the travel route display apparatus according to the present invention. As best shown in FIG. 15, in step S1201, the starting point inputting means 1101 is operated to allow a starting point to be inputted therein. Step S1201 goes forward to step S1202, in which the destination point inputting means 1102 is operated to allow a destination point to be inputted therein. Step S1202 goes forward to step S1203, in which the travel route searching means 1104 is operated to read out the road map data from the road map data storage means 1103. The step S1203 goes forward to step S1204, in which the travel route searching means 1104 is operated to search a travel route starting from the starting point to the destination point on the basis of the road map data read out in step S1203.

Step S1204 goes forward to step S1205, in which the travel route determining means 1105 is operated to determine at least one travel route to be displayed by the display means 1114 based on a predetermined condition. Here, at least one travel route determined based on the predetermined condition is, for example, a travel route constituted by optimum links corresponding to the minimum link cost calculated as described hereinearlier, or a travel route having a minimum travel distance starting from the starting point to the destination point. Further, the display means 1114 may display a plurality of travel routes and an operator may select a travel route from among a plurality of travel routes displayed by the display means 1114.

Step S1205 foes forward to step S1206, in which the travel route storage means 1106 is operated to store therein the travel route determined by the travel route determining means 1105. Step S1206 goes forward to step S1207, in which the travel distance storage means 1107 is operated to store therein a travel distance of the automotive vehicle or the like traveling along the travel route determined by the travel route determining means 1105 on each of the links. The travel distance is calculated based on the travel distance of each of the links included in the road map data stored in the road map data storage means 1103. An example of the travel route determined by the travel route determining means 1105 is the same as that of the travel route shown in FIG. 5. The example of the travel route shown in FIG 5 has been described in the above, and thus will not be described in detail hereinlater.

Step S1207 goes forward to step S1208, in which the distance time conversion means 1109 is operated to convert the travel distance of the automotive vehicle or the like traveling along the travel route into a travel time on the basis of the travel speed of the automotive vehicle or the like stored in the travel speed storage means 1108. The operation of converting the travel distance into the travel time has been described in the above with reference to FIG 6 and FIG 7, and thus will not be described hereinlater.

Step S1208 goes forward to step S1209, in which the travel time storage means 1110 is operated to store therein the travel time obtained from the distance time conversion means 1109. Step S1209 goes forward to step S1210, in which the display mode selecting means 1111 is operated to select one of display modes. Here, the display modes include a time display mode to have the display means 1114 display the travel route on the basis of the travel time taken for the automotive vehicle or the like to travel along the travel route on each of the links and a distance display mode to have the display means 1114 display the travel route on the basis of the travel distance of the automotive vehicle or the like traveling along the travel route on each of the links.

Step S1210 goes forward to step S1211, in which the first image processing means 1113 is operated to process image data indicative of the travel route stored in the travel route storage means 1106 in response to the display mode selected by the display mode selecting means 1111. Step S1211 goes forward to step S1212 in which the display means 1114 is operated to display the travel route, i.e., the result of the travel route searching process. Step S1212 goes forward to step S1213, in which the travel route guiding means 1115 is operated to guide the vehicle or the like along the travel route. Step S1213 goes forward to step S1214, in which the second image processing means 1116 is operated to process processing image data indicative of the travel route along which the vehicle or the like is to be guided in response to the display mode selected by the display mode selecting means 1111. Step S1214 goes forward to step S1215, in which the display means 1114 is operated to display the travel route along which the vehicle or the like is to be guided. Step S1215 goes forward to step S1216, in which the sound outputting means 1117 is operated to output voice sounds guiding the operator along the travel route. Here, display means 1114 may display the travel route both in the time display mode and the distance mode. In addition, the display means 1114 may display the travel route in the time display mode under the condition that the travel route is searched by the travel route searching means 1104, and the display means 1114 may display the travel route in at least one of the time display mode and the distance display mode under the condition that the vehicle or the like is guided along the travel route by the travel route guiding means 1115. Further, the display means 1114 may display the travel route in the time display mode under the condition that the travel route searched by the travel route searching means 1104 is to be displayed as a whole extending from the starting point to the destination.

The aforementioned steps S1201, S1202, and S1203 respectively constitute a starting point inputting step, a destination point inputting step, and a road map data reading step. The aforementioned steps S1204, S1207, and S1208 respectively constitute a travel route searching step, a travel distance storage step, and a distance time conversion step. The aforementioned steps S1215 and S1212 constitute a display step. The steps S1213 to S1216 collectively constitute a travel route guiding step.

As will be seen from the foregoing description, it is to be understood that the present embodiment of the route display apparatus according to the present invention can display travel route segments, for example, in the vicinity of the starting point and the destination point and guide the operator along the travel route in a clearly recognizable manner while preserving the main feature of the travel route as a whole even though the automotive vehicle or the like may travel a long distance starting from the starting point to the destination point partly along an express highway, resulting from the fact that the operation selecting means 1112 is operative to select one of two operation modes including a searching operation mode to have the result of the travel route searching process displayed and a guiding operation mode to have the operator guided along the travel route.

In view of the foregoing description, it is to be understood that the route display apparatus according to the present invention can display travel route segments of great importance for the operator, for example, travel route segments in the vicinity of the starting point and the destination point, in a clearly recognizable manner while preserving the main feature of the travel route as a whole, even though the operator may travel a long distance starting from the starting point to the destination point partly along an express highway.

## Claims

1. A travel route display apparatus, comprising:
starting point inputting means for inputting a starting point;
destination point inputting means for inputting a destination point;
road map data storage means for storing therein road map data including a plurality of links forming part of a road network and distance data representative of a travel distance on each of said links;
travel route searching means for searching a travel route from said starting point to said destination point;
travel distance storage means for storing therein a travel distance of a moving object traveling along said travel route on each of said links;
distance time conversion means for converting said travel distance into travel time on the basis of a predetermined travel speed of said moving object for each of said links; and
display means for displaying said travel route, and in which
said display means is operative to display said travel route on the basis of said travel time of said moving object.

2. A travel route display apparatus as set forth in claim 1, in which
said display means is operative to display a time required for said moving object to travel a travel distance along said travel route displayed by said display means.

3. A travel route display apparatus as set forth in claim 1 or claim 2, which further comprises:
display mode selecting means for selecting one of two display modes including a time display mode to have said travel route displayed on the basis of said travel time and a distance display mode to have said travel route displayed on the basis of said travel distance, and in which
said display means is operative to assume one of two display modes including said time display mode to display said travel route on the basis of said travel time and said distance display mode to display said travel route on the basis of said travel distance in response to said display mode selected by said display mode selecting means.

4. A travel route display apparatus as set forth in any one of claims 1 through 3, which further comprises:
link omission judging means for judging each of said links to be displayed by said display means in a simplified manner as being partly omitted or not on the basis of a predetermined value of said travel time or a predetermined value of said travel distance, and in which
said display means is operative to have said travel route partly displayed in said simplified manner.

5. A travel route display apparatus as set forth in claim 3 or claim 4, in which
said display means is operative to display said display mode selected by said display mode selecting means.

6. A travel route display apparatus as set forth in claim 3 or claim 4, which further comprises:
display screen dividing means for dividing a display screen displayed by said display means into a plurality of screen areas, and in which
said, display means is operative to display said travel route on said display screen divided into said screen areas divided by said display screen dividing means and selectively assume one of said time display mode and said distance display mode for each of said screen areas.

7. A travel route display apparatus as set forth in claim 6, in which
said display means is operative to selectively assume one of said time display mode and said distance display mode for each of said screen areas in such a manner that each of said screen areas on which said travel route is displayed in said time display mode is distinctively different from each of said screen areas on which said travel route is displayed in said distance display mode.

8. A travel route display apparatus as set forth in claim 7, in which
said display means is operative to selectively assume one of said time display mode and said distance display mode for each of said screen areas in such a manner that each of said screen areas on which said travel route is displayed in said time display mode is distinctively different in color from each of said screen areas on which said travel route is displayed in said distance display mode.

9. A travel route display apparatus as set forth in claim 7, in which
said display means is operative to selectively assume one of said time display mode and said distance display mode for each of said screen areas in such a manner that each of said screen areas on which said travel route is displayed in said time display mode is distinctively different in line thickness indicative of width of each of roads forming part of said road network from each of said screen areas on which said travel route is displayed in said distance display mode.

10. A travel route display apparatus as set forth in claim 7, in which
said display means is operative to selectively assume one of said time display mode and said distance display mode for each of said screen areas in such a manner that each of said screen areas on which said travel route is displayed in said time display mode is distinctively different in line style indicative of width of each of roads forming part of said road network from each of said screen areas on which said travel route is displayed in said distance display mode.

11. A travel route display apparatus as set forth in any one of claims 1 through 10, in which
said display means is operative to display said travel route on the basis of said travel time under the condition that said travel route searched by said travel route searching means is to be displayed as a whole extending from said starting point to said destination point.

12. A travel route display apparatus as set forth in any one of claims 1 through 11, which further comprises travel route guiding means for guiding along said travel route, and in which
said display means is operative to display said travel route on the basis of said travel time under the condition that said travel route is searched by said travel route searching means, and
said display means is operative to display said travel route on the basis of at least one of said travel time and said travel distance under the condition that along said travel route is guided by said travel route guiding means.

13. A travel route display apparatus as set forth in any one of claims 1 through 12, and in which
said display means is operative to display a travel route segment forming part of said travel route on the basis of said travel time under the condition that said travel route segment in the vicinity of said starting point is to be displayed within a predetermined range.

14. A travel route display apparatus as set forth in any one of claims 1 through 13, and in which
said display means is operative to display a travel route segment forming part of said travel route on the basis of said travel time under the condition that said travel route segment in the vicinity of said destination point is to be displayed within a predetermined range.

15. A travel route display apparatus as set forth in any one of claims 1 through 14, and in which
said travel time includes waiting time and delay time,
said waiting time includes time spent in waiting at a traffic light and a railroad crossing and
said delay time includes time elapsed while pausing, turning right or left at an intersection.

16. A travel route display apparatus as set forth in any one of claims 1 through 15, which further comprises: information receiving means for receiving traffic congestion information, and in which
said travel time includes congestion travel time in view of an average travel time contained in said traffic congestion information.

17. A travel route display method, comprising:
a starting point inputting step of inputting a starting point;
a destination point inputting step of inputting a destination point;
a road map data reading step of reading out road map data including a plurality of links forming part of a road network and distance data representative of a travel distance on each of said links;
a travel route searching step of searching a travel route from said starting point to said destination point;
a travel distance storage step of storing a travel distance of a moving object traveling along said travel route on each of said links;
a distance time conversion step of converting said travel distance into travel time on the basis of a predetermined travel speed of said moving object for each of said links; and
a display step of displaying said travel route, and in which
said display step has a step of displaying said travel route on the basis of said travel time.

18. A travel route display method as set forth in claim 17, which further comprises:
a display screen dividing step of dividing a display screen displayed in said display step into a plurality of screen areas, and in which
said display step has a step of displaying said travel route on said display screen divided into said screen areas divided in said display screen dividing step and selectively displaying said travel route on the basis of said travel time and said travel distance for each of said screen areas divided in said display screen dividing step.

19. A travel route display method as set forth in claims 17 or claim 18, which further comprises a travel route guiding step of guiding along said travel route, and in which
said display step has a step of displaying said travel route on the basis of said travel time under the condition that said travel route is searched in said travel route searching step, and
said display step has a step of displaying said travel route on the basis of at least one of said travel time and said travel distance under the condition that along said travel route is guided in said travel route guiding step.
